# EUROPÄISCHE PATENTANMELDUNG

(11) **EP 1 707 045 A1**
(43) Veröffentlichungstag der Anmeldung: **04.10.2006**
(21) Anmeldenummer: 06111833.7
(22) Anmeldetag: 28.03.2006
(51) Int. Cl.: A01F 15/07

(54) **Ladevorrichtung**

(30) Priorität: 02.04.2005 DE 102005015224
(71) Anmelder: Deere & Company, Moline, IL 61265-8098 (US)
(72) Erfinder: Chapon, Emmanuel, 70100, Velet (FR); Viaud, Jean, 70100, Gray (FR); Chapron, Fabien, 51600, Suippes (FR)
(74) Vertreter: Magin, Ludwig Bernhard

(57) **Zusammenfassung**

Es wird eine Ladevorrichtung (34) für die Hüllmittelrolle (32) einer Umhüllungsvorrichtung (18) vorgeschlagen, bei der die Hüllmittelrolle (32) auf einen Träger (38) aufgelegt und in einen Betriebszustand bewegt werden kann, wo sie mittels mehrerer Rollen (28, 54, 100) lagegesichert wird. Eine der Rollen (100) wird von den übrigen Rollen (28, 54) entfernt, so dass die Hüllmittelrolle (32) aufgesetzt werden kann, sobald der Träger (38) zu seiner Ladestellung bewegt wird.

## Beschreibung

Die Erfindung betrifft eine Ladevorrichtung einer Umhüllungsvorrichtung, insbesondere einer Rundballenpresse, für eine Hüllmittelrolle.

Im Stand der Technik sind verschiedene Vorrichtungen bekannt, mit denen eine Hüllmittelrolle in die Umhüllungsvorrichtung z.B. einer Rundballenpresse eingesetzt werden kann. So zeigt z.B. die EP 1 099 366 A1 eine Ladevorrichtung, bei der eine Hüllmittelrolle auf einen Träger aufgelegt und mit diesem in eine Betriebsstellung gebracht werden kann.

Das der Erfindung zugrunde liegende Problem wird darin gesehen, dass es nach dem Einlegen der Hüllmittelrolle noch weiterer Handgriffe bedarf, bis die Umhüllungsvorrichtung betriebsbereit ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Dadurch, dass die Ladevorrichtung einen Träger zur Aufnahme der Hüllmittelrolle, der zwischen einer Ladestellung und einer Betriebsstellung bewegbar ist, eine Betätigungsvorrichtung, die geeignet ist, die Hüllmittelrolle während des Hüllbetriebs mittels einer Rolle zu beaufschlagen und Mittel enthält, die die Betätigungsvorrichtung abhängig von der Stellung des Trägers aktivieren, wird sie lediglich durch die Bewegung des Trägers betriebsbereit gemacht. Dieser Vorteil vereinfacht die Bedienung, stellt sicher, dass bei hochgeklapptem Träger die Ladevorrichtung betriebsbereit ist und spart Zeit. Die Beziehung zwischen dem Träger und der Betätigungsvorrichtung kann sowohl mechanisch als auch elektrisch oder hydraulisch hergestellt werden, unter anderem durch Schalter oder mechanische Folgeglieder. Die mittels der Betätigungsvorrichtung anlegbare Rolle kann sicherstellen, dass die Hüllmittelrolle ihre Betriebsstellung nicht verlässt und/oder, dass auf das Hüllmittel ein Druck ausgeübt wird, der zu einer gewollten Spannung bei Betrieb führt. Diese Rolle kann sowohl freilaufend, als auch gebremst oder Motor getrieben sein.

Die motorische Verstellung des Trägers hat insbesondere dort einen großen Vorteil, wo der Träger ein hohes Gewicht aufweist und/oder schlecht zugänglich ist. Die motorische Verstellung kann zudem auf eine Steuervorrichtung übertragen und an die Situation angepasst werden.

Die Verwendung eines Leerlaufs in der Verbindung zwischen der Betätigungsvorrichtung und dem Träger macht es möglich, den Träger aus seiner Ladestellung in seine Betriebsstellung zu bringen, ohne dass die Betätigungsvorrichtung sofort aktiviert wird; vielmehr wird diese erst wirksam, wenn ein bestimmter Weg überschritten ist. Ein solcher Leerlauf kann mittels eines Schlitzes und eines darin geführten Lagers, mittels einer Feder, mittels eines Freilaufs oder dergleichen erzeugt werden. Je nach den Umständen kann der Leerlauf auch in beiden Richtungen oder in nur einer Richtung vorgesehen werden.

Eine Betätigungsvorrichtung, die über eine Totpunktstellung führbar ist, ist in dieser wirkungslos, was genutzt werden kann, um eine Bewegung zu vermeiden. Außerdem kann eine als Feder, insbesondere als Gasdruckfeder ausgebildete, Betätigungsvorrichtung in der Neutralstellung gespannt werden und jenseits von ihr die gespeicherte Energie freisetzen. Wenn die Betätigungsvorrichtung auf beiden Seiten wirken kann, kann sie auch eine von ihr eingeleitete Schwenkbewegung sowohl im als auch entgegen dem Uhrzeigerdrehsinn bewirken.

Der Betrieb der Hüllmittelrolle wird sichergestellt, wenn eine Platte vorgesehen ist, die der Sicherung der Lage der Hüllmittelrolle dient, d.h., die dafür sorgt, dass sie auf der angetriebenen Rolle aufsitzt. Diese Platte kann auf vielfältigste Weise, z.B. gerade, gebogen oder geknickt, mit oder ohne Reibbelag, starr oder fest, vollflächig oder perforiert, etc. ausgebildet sein.

Die Bewegung der Hüllmittelrolle auf dem Träger wird auf einfache Weise kontrolliert, wenn der Träger ein als Parallelogrammgestänge ausgebildetes Gestänge aufweist, das mit einer Auflage und/oder einem Rollenträger versehen ist, weil mit einem solchen Parallelogrammgestänge Kippbewegung vermieden werden können, die ansonsten zum Abrollen der Hüllmittelrolle führen könnten.

Ein einfach aufgebauter Rollenträger enthält eine Stützrolle und eine Platte, die der Aufnahme der Hüllmittelrolle dienen und zu einer baulichen Einheit zusammengefasst sind.

Wenn zwischen der Stützrolle und der Platte ein Abstand vorgesehen ist, der geeignet ist, eine antreibbare Rolle der Hüllvorrichtung aufzunehmen, auf die die Hüllmittelrolle in einem Betriebszustand aufsetzbar ist, kann erreicht werden, dass sich beim Aufsetzen der Hüllmittelrolle auf diese Rolle die Hüllmittelrolle von der Platte abhebt und frei auf der Rolle und der Stützrolle dreht, was den Netzlauf schont.

In der Zeichnung ist ein nachfolgend näher beschriebenes Ausführungsbeispiel der Erfindung dargestellt. Es zeigt:
- Fig. 1: eine Rundballenpresse mit einer Umhüllungsvorrichtung,
- Fig. 2: die Umhüllungsvorrichtung in einem Ladezustand,
- Fig. 3: die Umhüllungsvorrichtung mit einer Hüllmittelrolle in einem geladenen und betriebsmäßigen Zustand, und
- Fig. 4: die Umhüllungsvorrichtung mit einer Hüllmittelrolle zwischen einer Lade- und einer Betriebsstellung, und
- Fig. 5: die Umhüllungsvorrichtung mit der Hüllmittelrolle in betriebsmäßigem Zustand mit einer nahezu aufgebrauchten Hüllmittelrolle.

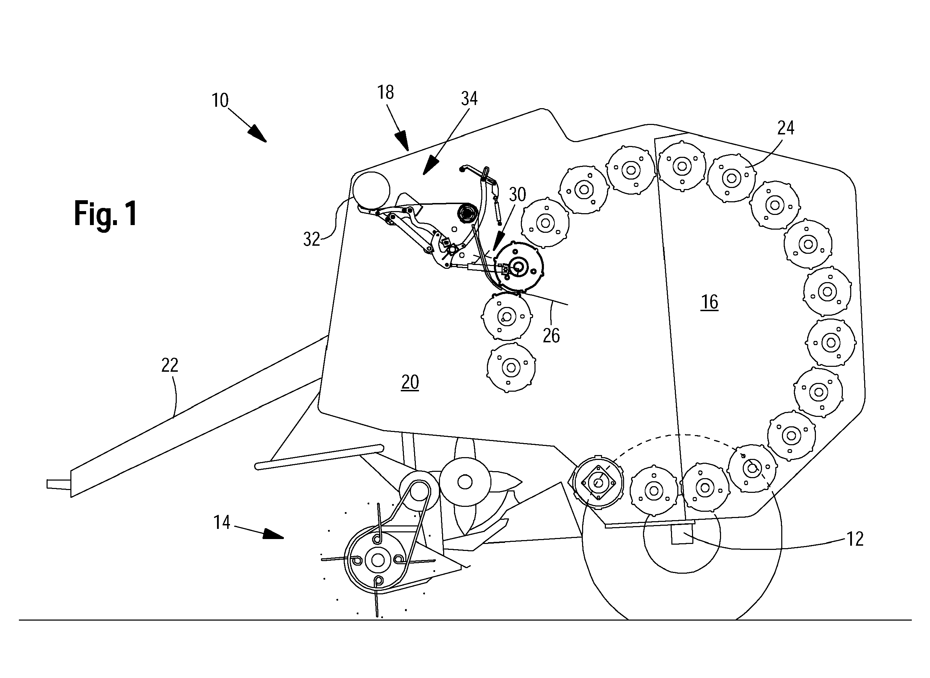

Eine in Figur 1 gezeigte Rundballenpresse 10 weist ein Fahrgestell 12, eine Erntegutzufuhrvorrichtung 14, eine Presskammer 16 und eine Umhüllungsvorrichtung 18 auf.

Die Rundballenpresse 10 steht hier stellvertretend für eine Presse, die ein Presserzeugnis liefert, das mit Hüllmittel umhüllt werden kann. Folglich kann es sich um eine landwirtschaftlich oder industriell einsetzbare Presse handeln, mit der Erntegut, Müll, Papier, Stoff, Baumwolle, Tabak, etc. insbesondere zu rundzylindrischen Ballen geformt werden kann. Die dargestellte Bauweise einer Festkammerpresse ist ebenfalls nur beispielhaft und kann durch eine Rundballenpresse 10 mit einer in der Größe variablen Presskammer 16 oder mit einer gemischten Bauweise ausgebildet sein. Grundsätzlich könnte die Umhüllungsvorrichtung 18 überall dort eingesetzt werden, wo es gilt, einen Gegenstand mit einem von einer Rolle abzuziehenden Hüllmittel zu bedecken, d.h. auch unabhängig von dem Vorhandensein einer Presse.

Das Fahrgestell 12 weist in nicht näher bezeichneter Weise einen Rahmen und eine Achse mit Rädern auf, an den Seitenwände 20 und eine Deichsel 22 angebracht sind, wie dies herkömmlich vorgenommen wird. Die Deichsel 22 erstreckt sich annähernd horizontal von dem vorderen Endbereich des Fahrgestells 12 zu einem nicht gezeigten Zugfahrzeug.

Die Erntegutzufuhrvorrichtung 14 steht stellvertretend für jegliche Vorrichtung, mit der zu pressendes Gut in die Presskammer 16 gespeist wird. Die Erntegutzufuhrvorrichtung 14 befindet sich unterhalb der Deichsel 22.

Die Presskammer 16 erstreckt sich zwischen den beiden Seitenwänden 20 und wird in diesem Fall von einer Vielzahl auf einem Kreis gelegener Walzen 24 umgeben, die allerdings im vorderen Bereich einen oberen Spalt für die Umhüllungsvorrichtung 18 und einen unteren Spalt für die Erntegutzufuhrvorrichtung 14 belassen.

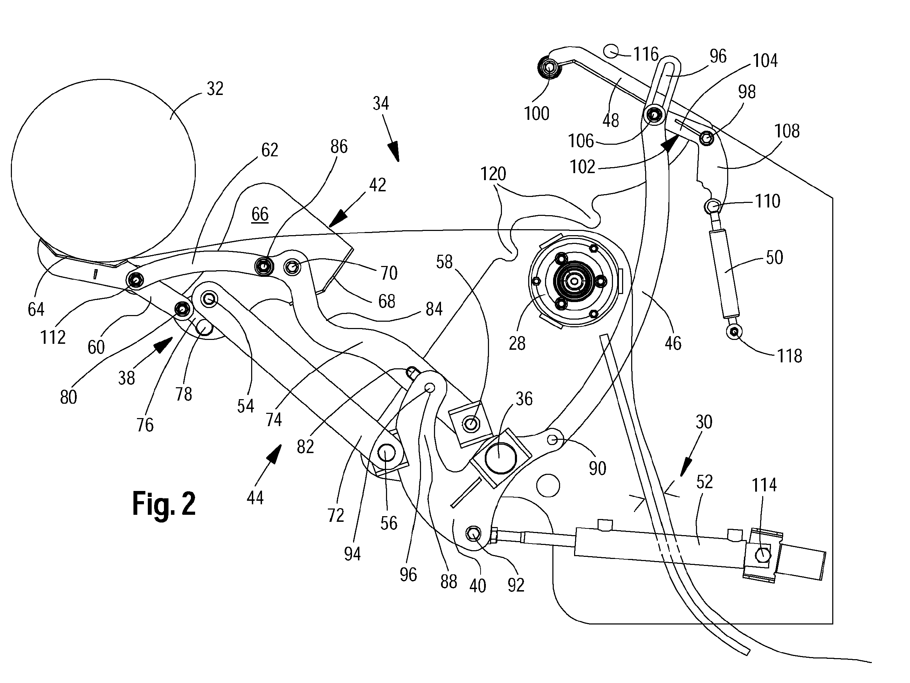

Die Umhüllungsvorrichtung 18 wird benutzt, um in die Presskammer 16 Hüllmittel 26 in der Form von Folie, Netz, Papier oder dergleichen einzuführen und um ein Presserzeugnis zu wickeln. Derartige Umhüllungsvorrichtungen 18 sind ihrer Art nach bekannt und können an fast beliebigen Stellen der Rundballenpresse 10 angeordnet werden; vorteilhafterweise ist ihre Unterbringung so gewählt, dass eine Bedienungsperson leicht Zugang zu ihr hat. In dem vorliegenden Fall befindet sich die Umhüllungsvorrichtung 18 im vorderen Bereich des Fahrgestells 12 oberhalb der Deichsel 22 und ist so ausgebildet, dass sie das Hüllmittel 26 durch einen Spalt - den oberen - zwischen zwei Walzen 24 in die Presskammer 16 abgibt. Im Bereich des Spalts befindet sich eine Rolle 28 zur Zufuhr von Hüllmittel 26 und eine Trennvorrichtung 30, um dieses zu trennen, wie dies hinlänglich bekannt ist. Das Hüllmittel 26 ist auf einer Hüllmittelrolle 32 aufgewickelt. Der Umhüllungsvorrichtung 18 ist auch eine Ladevorrichtung 34 zugeordnet, zu deren Beschreibung auf die Figuren 2 bis 5 verwiesen wird.

Figur 2 zeigt die Umhüllungsvorrichtung 18 und deren Ladevorrichtung 34 in einem Ladezustand, wobei in der Darstellung insbesondere folgende Komponenten zu erkennen sind: ein Lager 36, ein Träger 38, ein Stellglied 40, ein Rollenträger 42, ein Gestänge 44, ein Lenker 46, ein Andrückarm 48, eine erste Betätigungsvorrichtung 50, eine zweite Betätigungsvorrichtung 52 und eine bewegliche Stützrolle 54.

Die Ladevorrichtung 34 ist so geschaffen und angeordnet, dass eine Hüllmittelrolle 32 relativ bequem von einer Bedienungsperson auf den Träger 38 aufgelegt und insbesondere mittels oder unterstützt von der zweiten Betätigungsvorrichtung 52 in eine Betriebsstellung gebracht und mittels der Betätigungsvorrichtung 50 betriebsfertig gemacht werden kann.

Das Lager 36 wird von einer durchgehenden Welle, einem Zapfen oder dergleichen gebildet, welche/r eine sich quer zur Fahrtrichtung erstreckende, waagrechte Schwenk- oder Drehachse definiert, die parallel zu, vor und unterhalb der Drehachse der Rolle 28 verläuft.

Der Träger 38 kann aus Stahl oder Kunststoff hergestellt sein und ist ausreichend stark, um die Hüllmittelrolle 32 tragen und transportieren zu können; üblicherweise ist er als ein Schweiß-und Schraubzusammenbau gebildet, der sich im Wesentlichen zwischen den beiden Seitenwänden 20 erstreckt und um zwei Lager 56, 58 vertikal schwenkbar ist. Der Träger 38 schließt den Rollenträger 42 und das Gestänge 44, sowie einen ersten Lenker 60, einen zweiten Lenker 62 und eine Auflage 64 ein und ist wie folgt ausgebildet.

Das Stellglied 40 ist als eine Platte ausgebildet und mit seinem Innern auf dem Lager 36 vertikal schwenkbar aufgenommen. An den Enden dreier Arme, von denen ein Arm 88 nahezu auf einem Kreisbogen verlaufend ausgebildet ist, sind Lager 90, 92, 94 vorgesehen, die jeweils Schwenkbolzen, Schrauben, Stifte oder dergleichen formschlüssige Verbindungselemente aufweisen können. Das Lager 90 dient dem schwenkbaren Anschluss des Lenkers 46, das Lager 92 dem schwenkbaren Anschluss der zweiten Betätigungsvorrichtung 52 und das Lager 94 der Verbindung mit dem Stelllenker 74 mittels eines Stiftes 96, der den Schlitz 82 durchdringt. Der Arm 88 verläuft nicht radial zu dem Lager 36, sondern teilweise auf einem Kreisbogen um dieses, damit er in einer extremen Schwenkstellung des Stellglieds 40 nicht mit dem Lager 58 kollidiert.

Der Rollenträger 42 enthält zwei parallele Seitenflächen 66, die mittels einer Platte 68 miteinander verbunden, vorzugsweise verschweißt sind. Die Seitenflächen 66 weisen ein Lager 70 auf und verlaufen parallel zu den Seitenwänden 20 und mit geringem Abstand zu ihnen. Die Platte 68 ist um ca. 20 Grad geknickt und erstreckt sich in allen Stellungen des Rollenträgers 42 unter einem Winkel von ca. 45 Grad nach oben. Mit der Hilfe der Platte 68 wird erreicht, dass die Hüllmittelrolle 32 nicht von dem Rollenträger 42 rollt oder in eine Stellung gelangt, in der ein Hüllbetrieb nicht möglich ist. Die Platte 68 befindet sich auf der der Auflage 64 abgelegenen Seite des Trägers 38.

Das Gestänge 44 ist als ein Parallelogrammgestänge ausgebildet und enthält einen Führungslenker 72 und einen Stelllenker 74, wobei zu beachten ist, dass vorzugsweise auf jeder Seite der Ladevorrichtung 34 ein solches Gestänge 44 vorgesehen ist.

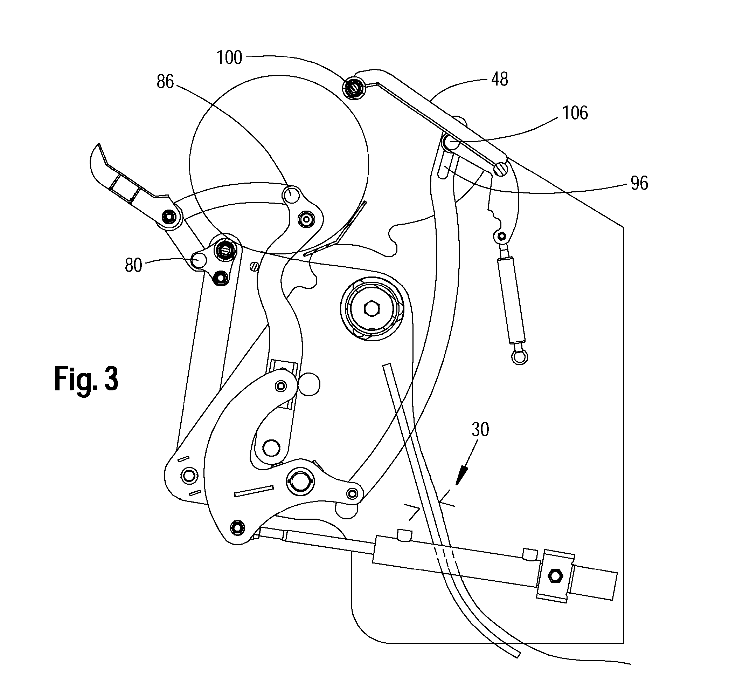

Der Führungslenker 72 ist als ein einfaches Flacheisen ausgebildet, das mit seinem unteren Endbereich auf dem Lager 56 vertikal schwenkbar aufgenommen ist und an seinem oberen Endbereich eine in Figur 3 gezeigte Anschlussplatte 76 aufnimmt. Die Anschlussplatte 76 ist mittels der beweglichen Stützrolle 54 schwenkbar auf dem Führungslenker 72 gehalten und im Wesentlichen von einer dreieckigen Form. In die Anschlussplatte 76 kann eine Schraube 78 eingeschraubt werden, und es ist ein Lager 80 für den ersten Lenker 60 vorgesehen, das aus einem Bolzen, einer Schraube oder dergleichen gebildet sein kann. Mittels der Schraube wird die Anschlussplatte 76 an den Rollenträger 42 angeschraubt.

Der Stelllenker 74 hat nahezu die gleiche Länge wie der Führungslenker 72, weist aber zusätzlich einen Schlitz 82 und eine Ausbuchtung 84 auf. Mit seinem unteren Endbereich ist der Stelllenker 74 auf dem Lager 58 vertikal schwenkbar gehalten, und mit seinem oberen Endbereich ist er in dem Lager 70 mit dem Rollenträger 42 schwenkbar verbunden. Somit ergibt sich aus dem Führungslenker 72, dem Stelllenker 74, den Lagern 56, 58, 70 und der Stützrolle 54 das vorerwähnte Gestänge 44. Der Schlitz 82 erstreckt sich in der Längsrichtung des Stelllenkers 74, und zwar in der Nähe von dessen unterem Endbereich. Die Ausbuchtung 84 befindet sich mehr in der Nähe des Lagers 70, und zwar so, dass sie auf der der Rolle 28 zugewandten Seite offen ist und in einer bestimmten Schwenkstellung diese teilweise umgeben kann. Nahe des Lagers 70 befindet sich ein weiteres Lager 86 in dem oberen Endbereich des Stelllenkers 74.

Der Lenker 46 ist als ein mit einem großen Radius gekrümmtes Flacheisen ausgebildet, ist mit seinem unteren Endbereich auf dem Lager 90 vertikal schwenkbar aufgenommen, in seinem oberen Endbereich mit einem Schlitz 96 versehen, der sich im Wesentlichen entlang der Längsachse des Lenkers 46 erstreckt, und verläuft stets aufrecht. Die Krümmung verläuft konkav zu der Rolle 28.

Der Andrückarm 48 ist auf einem Lager 98 vertikal schwenkbar gehalten und an seinem dem Lager 98 abgelegenen Endbereich mit einer Achse verbunden, auf der eine Rolle 100 vorzugsweise drehbar gelagert ist. Die Rolle 100 verläuft parallel zu der Rolle 28 und ist so angeordnet, dass sie auf die Umfangsfläche der Hüllmittelrolle 32 aufgesetzt werden kann. Der Andrückarm 48 ist als ein Schweißzusammenbau von ungefähr rechteckförmiger Gestalt ausgebildet und nimmt - je nach Betriebszustand - Stellungen ein, die von leicht unterhalb einer Horizontalen bis zu einer leicht oberhalb davon reichen. Das Lager 98 kann als eine Welle ausgebildet sein, die in den Seitenwänden 20 drehbar gelagert ist oder auf der der Andrückarm 48 schwenken kann. Der Andrückarm 48 ist zudem mit einem zweischenkligen Arm 102 versehen, der starr mit ihm verbunden ist. Während ein oberer oder linker Schenkel 104 in seinem freien Endbereich ein Lager 106 aufweist, das z.B. als ein Stift ausgebildet ist, der den Schlitz 96 durchdringt, verläuft ein unterer oder aufrechter Schenkel 108 zu diesem unter einem stumpfen Winkel von ca. 135 Grad und ist in seinem freien Endbereich mit einem Lager 110 versehen, das als eine einfache Schraube ausgebildet sein kann. Das Lager 98 ist derart angeordnet und der Andrückarm 48 ist derart bemessen und ausgebildet, dass die Rolle 100 auf die Mantelfläche der Hüllmittelrolle 32 aufgesetzt werden kann und dieser während des Hüllbetriebs trotz sich verringerndem Durchmesser folgen kann.

Die Betätigungsvorrichtung 50 ist in diesem Ausführungsbeispiel als eine Gasdruckfeder ausgebildet; alternativ könnte auch eine mechanische Feder, z.B. eine Schraubendruckfeder vorgesehen sein, oder gar ein Motor, z.B. ein Hydraulik- oder Elektromotor. Die Betätigungsvorrichtung 50 ist mit einem oberen Endbereich in dem Lager 100 an dem Arm 102 und mit dem unteren Endbereich an dem Fahrgestell 12 oder einer Seitenwand 20 in einem Lager 118 schwenkbar gehalten; in jedem Betriebszustand erstreckt sie sich ziemlich aufrecht. Allerdings bewegt sich das Lager 110 aus einer Lage rechts einer gedachten Geraden durch die Lager 98 und 118 in eine Lage links davon und umgekehrt, während sich der Andrückarm 48 zwischen seiner Lade- und seiner Betriebsstellung bewegt. Die Anordnung der Betätigungsvorrichtung 50 ist so gewählt, dass sie den Arm 102 und den Andrückarm 48 jenseits einer Neutral- oder Totpunktstellung in oder entgegen dem Uhrzeigerdrehsinn zu drehen sucht.

Die zweite Betätigungsvorrichtung 52 ist als ein doppeltwirkender Hydraulikzylinder, Elektromotor oder dergleichen ausgebildet und ist einenends in einem ortsfesten Lager 114 und anderenends in dem Lager 92 jeweils schwenkbar gehalten. Die zweite Betätigungsvorrichtung 52 verläuft während aller Betriebszustände hauptsächlich waagrecht. Die bewegliche Stützrolle 54 ist in dem Führungslenker 72 drehbar gelagert und nimmt auf ihrem Umfang oder auf einer Welle sowohl den Rollenträger 42 als auch die Anschlußplatte 76 schwenkbar auf. Die bewegliche Stützrolle 54 ist so angeordnet, dass sie entweder gemeinsam mit der Platte 68 oder mit der Rolle 28 die Hüllmittelrolle 32 auf zwei Linien stützen kann.

Der erste Lenker 60 beträgt nur ca. ein Fünftel der Länge des Führungslenkers 72 und ist einenends auf dem Lager 80 an der Anschlußplatte 76 gelagert; anderenends geht er in eine Seitenwange der Auflage 64 einstückig über, wobei in dem Übergangsbereich ein Lager 112 vorgesehen ist.

Der zweite Lenker 62 ist geringfügig gekrümmt, verläuft stets ungefähr waagrecht und verbindet die Lager 112 und 86; somit dient er der Steuerung der Lage der Auflage 64 gegenüber dem Gestänge 44.

Die Auflage 64 ist in der Art einer Mulde gebildet und breit und lang genug, um eine Hüllmittelrolle 32 zuverlässig aufzunehmen. Die Auflage 64 ist zudem in der Ladestellung - sh. Fig. 2 - leicht zu der Rolle 28 hin abfallend geneigt, um zu vermeiden, dass die Hüllmittelrolle 32 von ihr herunterrollt. In der einfachsten Ausführungsform besteht sie aus einem Schweißzusammenbau mit Rippen und Stegen.

Schließlich ist oberhalb des Andrückarms 48 ein starrer Anschlag 116 vorgesehen, an den die Oberseite des Andrückarms 48 zur Anlage bringbar ist. Dieser Anschlag 116 verhindert, dass die Betätigungsvorrichtung 50 vollkommen ausfahren und dadurch eventuell auf Dauer Schaden nehmen kann.

In der Seitenwand 20 können Einschnitte 120 vorgesehen werden, in die sich das Lager 70, die Stützrolle 54, die Schraube 78 oder dergleichen einsetzen können, wenn die Ladevorrichtung 34 ihre Betriebsstellung eingenommen hat, wodurch eine räumliche Stabilisierung der Ladevorrichtung 34 während des Betriebs gewährleistet wird.

Es wird darauf hingewiesen, dass die Schwenkachsen, die von allen Lagern der Ladevorrichtung 34 gebildet werden und auch die Drehachsen der Rollen 28, 54 und 100 zueinander parallel und im Falle der Verwendung in einer Rundballenpressen 10 waagrecht und quer zur Fahrtrichtung verlaufen. Unter "Lager" wird gewöhnlich ein Stift, eine Schraube, ein Bolzen, ein Zapfen, eine Welle oder dergleichen verstanden, der/die in einer Bohrung, einer Ausnehmung, einem Schlitz oder dergleichen drehen bzw. sich sonstwie bewegen kann.

Nach alledem ergibt sich folgender Zusammenbau und folgende Funktion - ausgehend von Figur 2, die den Ladezustand darstellt.

In dem Ladezustand ist die zweite Betätigungsvorrichtung 52 im Wesentlichen eingefahren, was bedeutet, dass:
a) das Stellglied 40 entgegen dem Uhrzeigerdrehsinn geschwenkt ist;
b) der Lenker 46 nach oben geschoben ist, so dass aufgrund der Anlage des Lagers 106 an dem unteren Ende des Schlitzes 96 der Arm 102 derart weit um das Lager 98 geschwenkt wird, dass die Wirkungslinie der Betätigungsvorrichtung 50 auf der Seite des Andrückarms 48 an dem Lager 98 vorbei führt und dieser somit nach oben bis zur Anlage an dem Anschlag 116 gedrückt wird.
c) der Stelllenker 74 und der Führungslenker 72 entgegen dem Uhrzeigerdrehsinn um das Lager 58 geschwenkt sind, wobei das Lager 94 in dem Schlitz 82 des Stelllenkers 74 gleitet;
d) der Rollenträger 42 mit dem Stelllenker 74 und dem Führungslenker 72 von der Rolle 28 weggeschwenkt ist;
e) die Plattform 64 aufgrund der Verbindung mit dem Stelllenker 74 über den zweiten Lenker 62 in eine ziemlich waagrechte Stellung gebracht ist;

In dieser Ladestellung kann eine Hüllmittelrolle 32 auf die Auflage 64 aufgelegt werden, und die Rolle 100 bzw. der Andrückarm 48 sind soweit angehoben, dass diese Hüllmittelrolle 32 anschließend auf die Rolle 28 aufgesetzt werden kann.

Ausgehend von dieser Ladestellung wird die Hüllmittelrolle 32 anschließend in ihre Betriebsstellung gebracht, in der Hüllmittel 26 unter Spannung von der Hüllmittelrolle 32 abgezogen werden kann. Hierzu wird die zweite Betätigungsvorrichtung 52 ausgefahren, was zunächst bewirkt, dass:
a) das Stellglied 40 im Uhrzeigerdrehsinn um sein Lager 36 schwenkt und somit auch das Gestänge 44 um die Lager 56, 58 schwenkt, so dass sich der Rollenträger 42 zu der Rolle 28 hin bewegt;
b) die Aufnahme 64 aufgrund ihres Anschlusses an den Stelllenker 74 über den zweiten Lenker 62 um das Lager 80 im Uhrzeigerdrehsinn schwenkt, so dass die Hüllmittelrolle 32 von der Aufnahme 64 herab auf die Stützrolle 54 und die Platte 68 rollt;

Dieser Zwischenzustand ist in Figur 3 gezeigt.

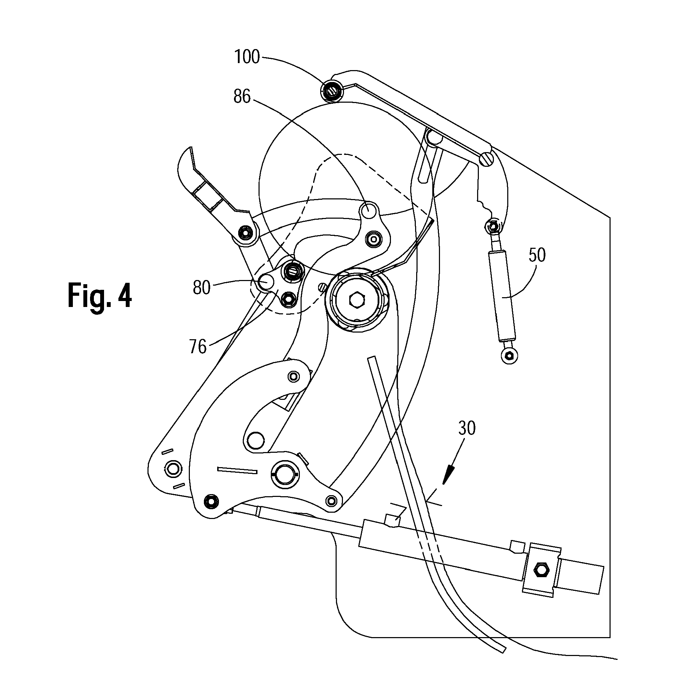

Wenn sich die Ladevorrichtung 34 ihrer Betriebsstellung nähert, wie sie aus Figur 4 zu entnehmen ist, übergreift der Spalt zwischen der Stützrolle 54 und der Platte 68 die Rolle 28 und setzt die Hüllmittelrolle 32 schließlich auf der Rolle 28 und der Stützrolle 54 auf, während sich die Platte 68 weiter nach unten bewegt und sich von dem Außenumfang der Hüllmittelrolle 32 entfernt. Beim Übergang von dem Zustand nach Figur 3 in den nach Figur 4 zieht das Stellglied 40 den Lenker 46 nach unten, so dass das Lager 106 an dem oberen Ende des Schlitzes 96 zur Anlage kommt und konsequenterweise auch der Andrückarm 48 um das Lager 98 entgegen dem Uhrzeigerdrehsinn nach unten geschwenkt wird; während dieser Bewegung wird die Betätigungsvorrichtung 50 zusammengedrückt, d.h. gekürzt. Sobald das Lager 110 die Gerade durch die Lager 118 und 98 überschreitet, wo die Betätigungsvorrichtung 50 ihre kürzeste Länge einnimmt, dehnt sie sich wieder aus und drückt den Andrückarm 48 entgegen dem Uhrzeigerdrehsinn um das Lager 98 nach unten. Auf diese Weise kommt die Rolle 100 an der Außenfläche der Hüllmittelrolle 32 zur Anlage und übt auf diese eine Druckkraft aus, die nicht nur die Hüllmittelrolle 32 auf der Stützrolle 54 und der Rolle 28 lagesichert, sondern auch für eine Reibung in dem abgezogenen Hüllmittel 26 sorgt. Es wird also sichtbar, dass die Betätigungsvorrichtung 50 wirksam wird, sobald der Träger 38 eine bestimmte Lage einnimmt.

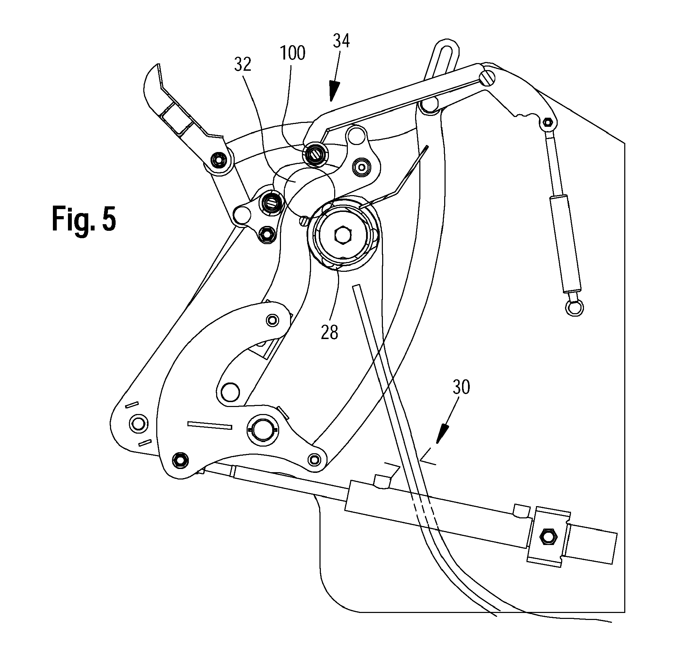

Figur 5 zeigt deutlich, dass der Schlitz 96 dem Lager 106 genügend Spielraum bietet, um dem abnehmenden Außendurchmesser der Hüllmittelrolle 32 zu folgen. Da sich die Neigung der Längsachse der Betätigungsvorrichtung 50 und somit auch der seitliche Abstand des Lagers 110 zu dem Lager 98 vergrößert, nimmt die Druckkraft der Rolle 100 auf die Hüllmittelrolle 32 bei abnehmendem Durchmesser zu.

Um die Ladevorrichtung 34 in den Ladezustand nach Figur 2 zu versetzen, wird die zweite Betätigungsvorrichtung 52 wieder eingefahren.

## Patentansprüche

1. Ladevorrichtung (34) einer Umhüllungsvorrichtung (18), insbesondere einer Rundballenpresse (10), für eine Hüllmittelrolle (32) mit:
a) einem Träger (38) zur Aufnahme der Hüllmittelrolle (32), der zwischen einer Ladestellung und einer Betriebsstellung bewegbar ist;
b) einer Betätigungsvorrichtung (50), die geeignet ist, die Hüllmittelrolle (32) während des Hüllbetriebs mittels einer Rolle (100) zu beaufschlagen;
c) Mitteln, die die Betätigungsvorrichtung (50) abhängig von der Stellung des Trägers (38) aktivieren;

2. Ladevorrichtung nach Anspruch 1, **dadurch gekennzeichnet, dass** der Träger (38) mittels einer Betätigungsvorrichtung (52) motorisch bewegt werden kann.

3. Ladevorrichtung nach Anspruch 1 oder 2, **dadurch gekennzeichnet, dass** in der Verbindung zwischen der Betätigungsvorrichtung (50) und dem Träger (38) ein begrenzter Leerlauf vorgesehen ist.

4. Ladevorrichtung nach einem oder mehreren der vorherigen Ansprüche, **dadurch gekennzeichnet, dass** die Betätigungsvorrichtung (50) über eine Totpunktstellung führbar ist und seitlich der Totpunktstellung auf einen schwenkbaren Andrückarm (48) wirkt, an dem die Rolle (100) vorgesehen ist.

5. Ladevorrichtung nach einem oder mehreren der vorherigen Ansprüche, **dadurch gekennzeichnet, dass** eine Platte (68) vorgesehen ist, die der Sicherung der Lage der Hüllmittelrolle (32) in und vorzugsweise zu der Betriebsstellung dient.

6. Ladevorrichtung nach einem oder mehreren der vorherigen Ansprüche, **dadurch gekennzeichnet, dass** der Träger (38) ein vorzugsweise als Parallelogrammgestänge ausgebildetes Gestänge (44) aufweist, das mit einer Auflage (64) und/oder einem Rollenträger (42) versehen ist.

7. Ladevorrichtung nach einem oder mehreren der vorherigen Ansprüche, **dadurch gekennzeichnet, dass** der Rollenträger (42) eine Stützrolle (54) und die Platte (68) aufweist, die der Aufnahme der Hüllmittelrolle (32) dienen.

8. Ladevorrichtung nach einem oder mehreren der vorherigen Ansprüche, **gekennzeichnet durch** einen Abstand zwischen der Stützrolle (54) und der Platte (68), der geeignet ist, eine antreibbare Rolle (28) aufzunehmen, auf die die Hüllmittelrolle (32) in einem Betriebszustand aufsetzbar ist.
